# EUROPEAN PATENT SPECIFICATION

(11) **EP 4 085 358 B1**
(45) Date of publication and mention of the grant of the patent: **18.06.2025**
(21) Application number: 20829229.2
(22) Date of filing: 23.12.2020
(51) Int. Cl.: G06F 21/31, H04W 12/06, H04W 8/18, G10L 15/00, G06F 3/16, G06Q 30/018, G06Q 30/0601, H04L 9/40, G10L 25/51, G10L 15/22

(54) **METHOD FOR AUTHENTICATING A USER, AND ARTIFICIAL INTELLIGENCE SYSTEM OPERATING ACCORDING TO SAID METHOD**
VERFAHREN ZUR AUTHENTIFIZIERUNG EINES BENUTZERS UND NACH DIESEM VERFAHREN ARBEITENDES SYSTEM DER KÜNSTLICHEN INTELLIGENZ
PROCÉDÉ D'AUTHENTIFICATION D'UN UTILISATEUR ET SYSTÈME D'INTELLIGENCE ARTIFICIELLE FONCTIONNANT SELON LEDIT PROCÉDÉ

(30) Priority: 30.12.2019 IT 201900025672
(43) Date of publication of application: 09.11.2022
(73) Proprietor: Telecom Italia SpA, 20123 Milano (MI) (IT)
(72) Inventor: CIARNIELLO, Alberto, 00186 Roma (IT)
(74) Representative: Metroconsult Srl
(86) International application number: PCT/IB2020/062390
(87) International publication number: WO 2021/137113

(56) References cited:
- EP-A1- 3 136 677
- EP-A1- 3 226 585
- WO-A1-2018/197343
- US-A1- 2011 047 607
- US-A1- 2019 253 324

## Description

The present invention refers to a method for authenticating a user, and an artificial intelligence platform operating according to said method.

Voice interaction based assistants (often referred to simply as "voice assistants"), based on artificial intelligence platforms ("Al platforms") for natural language understanding ("NLU"), are commonly used for allowing users to interact with electronic devices, service provider platforms, etc. in order to command operations (e.g. in a home automation environment, for turning a TV set on, changing the target temperature of an air conditioning system, locking/unlocking doors, etc.) or activate/use services both digital and physical (e.g. audio/video contents on demand, order of home delivery food, taxi, etc.).

In this context, the Applicant has noticed that voice assistants can usually receive and execute commands without any selection of the individual/user pronouncing the instructions. In other terms, basically anybody can cause a voice assistant to perform any action.

Accordingly, operations which have a security-related impact (e.g. unlocking a door) or a money-related impact (access to services already purchased by the user or online purchase of goods/services) may become unfeasible or critical and potentially dangerous.

The above scenario is already established in a private environment (e.g. at home), but becomes even more relevant in a possible future massive use within public environment, according to a diffused ambient computing scenario, where voice assistants may become ubiquitous for a variety of uses (e.g. voice assistant on a train, on toll gates machines, etc.).

Moreover, in a foreseeable future, a multiplicity of ambient vocal assistants may become available both on the same device and in different devices/environments, so that the same user may interact with them at different times and locations according to the user needs. For example, a user may use vocal assistant A at home, vocal assistant B on transportation, vocal assistant C at shopping or leisure locations (e.g. hotel services, cineplex access control, parking, etc.).

Document US 9,286,899 B1 discloses techniques for authenticating users at devices that interact with the users via voice input. For instance, the described techniques may allow a voice-input device to safely verify the identity of a user by engaging in a back-and-forth conversation. The device or another device coupled thereto may then verify the accuracy of the responses from the user during the conversation, as well as compare an audio signature associated with the user's responses to a pre-stored audio signature associated with the user.

Document US 2015/0087265 A1 discloses establishment of a service call between a service user and a call center for a service provider when the service user is contacted or calls into the call center of the service provider. The service provider may request basic account information for verification of the identity of the service user. If the service provider determines that a further verification of the user's identity is necessary, the service provider may send a verification code to the service user via the user communication device. The verification code is relayed back to the service provider. The transmitted verification code and the relayed verification code are compared and if the codes match, the user is authenticated.

Document WO 2018/197343 A1 discloses techniques for authenticating a personal voice assistant using an out-of-band speakable credential. A user of a mobile application executing on a first client device may be authenticated with a service that executes on server(s) and is configured to interact with personal voice assistant(s). Based on the authenticating, a speakable credential may be provided to the first client device. The providing may trigger the first client device to provide, as output using output device(s) of the first client device, the speakable credential. Data generated in response to an utterance of the speakable credential received at a second client device may be received, from a personal voice assistant associated with the second client device. The data may be matched to the speakable credential to authenticate the personal voice assistant with the service.

Document WO 2019/165332 A1 discloses methods for authenticating a user utilizing a smart speaker system. The methods include: requesting a user authentication by issuing a voice command to a smart speaker; playing a sonic one-time password (OTP) on the smart speaker received from an authentication server in response to the requesting a user authentication; receiving the sonic OTP by a mobile device of the user; transmitting an OTP decoded from the sonic OTP to the authentication server; and authorizing the user by the authentication server to execute a secure transaction using the smart speaker system.

The Applicant observes that the known techniques, although providing authentication features, still have limits and drawbacks which render them unsatisfactory, especially when considering the multiple vocal assistant and massive adoption scenarios described above.

In greater detail, the system disclosed in US 9,286,899 B1 is based on secret information shared in advance by the user and the Al platform (e.g. a vocal fingerprint) and substantially uses only one authentication criterion or "factor", which relies on said secret information. As a consequence, this system appears to be unsuitable for real-time authentication of a user, or in a public environment, where the vocal assistant is re-used by a multiplicity of unknown users, or when a user uses a vocal assistant available at another private location such as a hotel or a friend's home, and does not reach a satisfactory level of flexibility and reliability for enabling ecommerce user scenarios, as it is not vocal assistant independent.

The system disclosed in US 2015/0087265 A1 is limited to applications to call centers and does not provide any teachings concerning activation/use of services in association with the authentication technique. Furthermore, US 2015/0087265 requires that the user, when interacting with the call center in order to be authenticated, provides his/her account details, which is undesirable for both security and user-friendliness reasons.

The system disclosed in WO 2018/197343 A1 is based on one criterion or "factor" only, namely the speakable credential. This technique is felt not to be reliable enough, and does not appear to allow an easy and immediate identification of the user.

The system disclosed in WO 2019/165332 A1 appears to be very complex and hardly reliable, since the authentication technique is based not simply on voice recognition, but on a rather complex sound detection and recognition method. In fact, sounds can be altered by the specific hardware features of the devices and the operational conditions in which the same are used. For example, simply playing a sound at a volume level that is too high causes sound distortion and may compromise the whole authentication procedure. Furthermore, if sounds other than the human voice have to be detected and processed, the hardware structure (i.e. microphones) of the apparatus must be different, and more sophisticated, than the usual hardware structure of mobile devices and voice assistants. Furthermore, its use appears very limited in public spaces where background noise can reduce the effectiveness of the non-user speakable sound-based authentication, as no Al NLU technique can be used to reliably detect user speech. In addition to the above, this authentication technique is potentially prone to easy detection and un-authorized sound replication and is based on one criterion or "factor" only, namely the sonic OTP. This is felt to be an important limit in terms of security and reliability.

It is further disclosed in the patent application EP3136677A1, a method, apparatus, and system for voice verification, wherein the method comprises: at a network side, obtaining a user voice communication number according to a voice verification request from a user side, and determining voice verification information corresponding to the voice verification request; at the network side, initiating a call to a corresponding user according to the user voice communication number, and in the case of call through, playing the determined voice verification information to the user; at the user side, performing an automatic listening and recording operation when monitoring that the user is called, and upon termination of the call, sending recording information obtained from the recording to the network side; at the network side, determining a verification result according to the voice verification information and the recording information.

In view of the above, the Applicant has identified the need to provide an authentication method, to be performed by an artificial intelligence system implementing voice assistant functionalities, which provides the necessary cross-vocal assistant, cross-service, scalability, security and reliability features.

In the Applicant's view, a cross-vocal assistant authentication system is desirable to enable scalable, efficient, secure and user-friendly scenarios allowing at the same time re-use by a multiplicity of service providers for both digital and physical goods and services. Under such conditions the market adoption and value may be greatly enhanced.

Furthermore, it is desirable that the vocal assistant may not belong to a specific user but may allow to multiple users access to a multiplicity of available services; in such cases the services may be not known to the vocal assistant as "active" for a specific user until the user is properly authenticated.

According to one aspect, the invention provides a method for authenticating a user according to claim 1.

According to a second aspect, the invention provides a software program product according to claim 14.

According to a further aspect, the invention provides an artitifical intelligence system according to claim 15.

Further preferable aspects are set forth in the dependent claims.

Further features and advantages will appear more clearly from the detailed description of a preferred and non-exclusive embodiment of the invention. This description is given hereinafter with reference to the accompanying figures, also provided only for illustrative and, therefore, non-limiting purposes, in which:
- Figure 1 is a block diagram of a system in which the Al platform according to the invention can be used;
- Figure 2 is a diagram showing the steps carried out in a method according to the invention;
- Figure 3 is a diagram showing a first embodiment of a fallback procedure that can be carried out in the method of figure 2;
- Figure 4 is a diagram showing a second embodiment of a fallback procedure that can be carried out in the method of figure 2;
- Figures 5-5' are block diagrams schematically representing a scenario in which the invention can be used;
- Figure 6 is a block diagram representing a functional environment in which the steps of figure 3 can be carried out;
- Figure 7 is a block diagram representing a functional environment in which the steps of figure 4 can be carried out.

With reference to the accompanying figures, reference numeral 100 identifies an Al system according to the present invention.

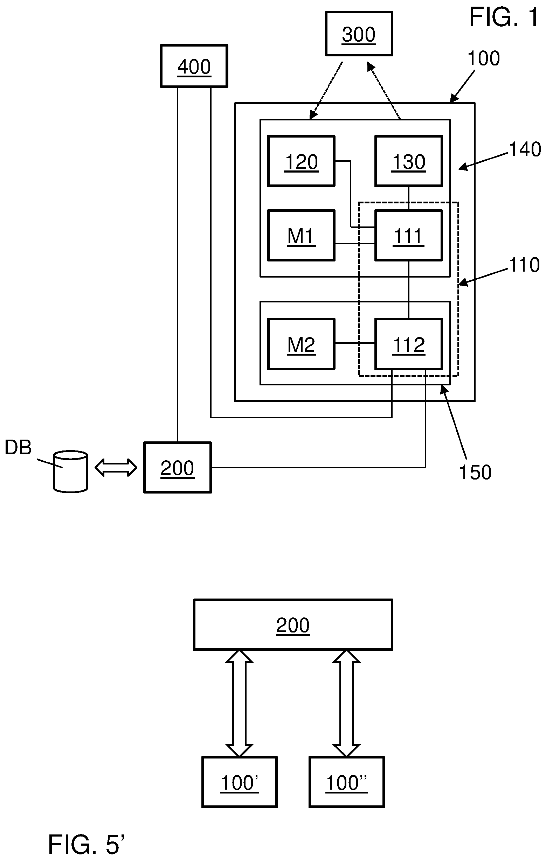

Al system 100 (figure 1) comprises an Al device 140 (also called a smart speaker or a device including a smart speaker) and an Al platform 150. The Al platform 150 is preferably cloud based. The subdivision of functionalities between the Al platform 150 and the Al device 140 may vary based on the Al system 100 itself. Preferably, the Al device 140 has a reduced set of functions in order to reduce its cost while the majority of NLU and Al service-related functions are carried out by the Al platform 150.

The Al system 100 comprises a processing unit 110. The processing unit 110 is suitably programmed in order to carry out the operations herewith disclosed and claimed.

Preferably, the processing unit 110 comprises one or more processors 111, 112. Processors 111, 112 can be arranged according to a distributed architecture. In one embodiment, a first processor 111 is included in the Al device 140, and a second processor 112 is included in the Al platform 150.

As mentioned above, functionalities of the Al system 100 can be split between the Al device 140 and the Al platform 150; the respective processors 111, 112 are configured to carry out the respective functions.

For example, the first processor 111 can be configured to manage audio processing, wakeword detection (i.e. detection of the word/expression that the user has to pronounce in order to activate the Al device 140), connection to the Al platform 150, etc.

For example, the second processor 112 can be configured to manage artificial intelligence functions, in particular related to the authentication method herein disclosed (e.g. cooperation with the service provider platform 200 disclosed in the following, comparison between codes, etc.).

Preferably, the processing unit 110 is associated to one or more respective memory areas M1, M2, wherein data/information useful for the activity of the same processing unit 110 are stored. In one embodiment, a first memory area M1 can be associated with the first processor 111, and a second memory area M2 can be associated with the second processor 112. Each of the two memory areas can be co-located with the corresponding processor and/ or can be cloud based. The second memory area M2, in particular, is preferably cloud based.

The Al system 100, and in particular the Al device 140, comprises a sound detecting module 120.

Preferably, the sound detecting module 120 is formed by or comprises one or more microphones. In particular, the sound detecting module 120 may comprise a plurality of microphones and additional functional audio processing modules comprising, for example, an audio front end subsystem. The microphone(s) included in the sound detecting module 120 can be realized with the MEMS (Micro Electrical Mechanical System) technology.

In general terms, the sound detecting module 120 detects sounds and is capable, in particular, of detecting and extracting human voice from noisy environments (wherein noise can be caused, for example, by the sound generating module 130 that will be disclosed hereinafter); the extracted voice is transduced into electrical signals, that can be provided to and processed by the first processor 111.

The Al system 100, and in particular the Al device 140, comprises a sound generating module 130.

Preferably, the sound generating module 130 is formed by or comprises one or more loudspeakers.

In general terms, the sound generating module 130 receives electrical signals from the first processor 111 and transduces them into audible sounds.

The Al system 100 is configured to provide voice assistant functionalities.

In other terms, the Al system 100 is configured to receive and interpret human speech, and to respond via a synthesized voice. The Al system 100 can also generate communications/command signals, intended for external devices, based on the vocal instructions received from the user.

The Al system 100 is configured to cooperate with a service provider platform 200.

As mentioned above, the present invention also encompasses scenarios in which more than one Al system is provided and/or more than one service provider platform is provided.

The service provider platform 200 is an IT platform which a service provider employs in order to communicate with the Al system 100 and preferably to activate and/or provide services that can be requested by a user via the Al device 140 of the Al system 100.

For example, the service provided by the service provider can be a digital service (e.g. an audio/vocal press review, music pieces provided in streaming, etc.) and/or a physical service (e.g. possibility to order home delivered food, ticket reservation and sales services, etc.). Preferably, the service is a paid service, i.e. a service that is provided upon payment of a determined amount of money. The service can be a single-event service (i.e. is typically used only once), a service that is provided with a determined periodicity, or an on-demand service. The payment method can include cash (e.g. at a physical point of sale, upon subscription to the service), credit card, debit card (details of which are provided from the user to the service provider upon subscription to the service, online or at a physical point of sale), virtual wallet (typically created upon online subscription), etc.

A user 300 is subscribed to a service provided by the service provider or has an account with the service provider (managed by the service provider platform 200) allowing purchase of added-value digital and/or physical services.

Typically, a plurality of users is subscribed to such service. For the sake of simplicity, the operations regarding only one user will be considered hereinafter. However, it should be noted that the following description can be applied to any users subscribed to said service.

Upon subscription or activation of said service, the user provides the service provider with identifying information, comprising at least a telephone number TN - preferably, a mobile telephone number. The identifying information preferably also include information regarding payment (according to one or more of the aforementioned payment methods).

In a preferred embodiment, the identifying information further comprises a user selected pronounceable password PP such as, for example, one of the words present in a language dictionary.

The identifying information, consisting of or comprising the telephone number TN, are stored in a database DB included in or associated to the service provider platform 200.

Accordingly, the service provider platform 200 can access to the telephone numbers of subscribed users. In this embodiment, if a certain telephone number is not stored in the database DB, then the respective user does not result to be subscribed to the service.

The Al system 100 communicates and cooperates with the service provider platform 200 in order to manage the activation and possibly the provision of the service, exploiting the voice assistant functionalities implemented by the Al system 100.

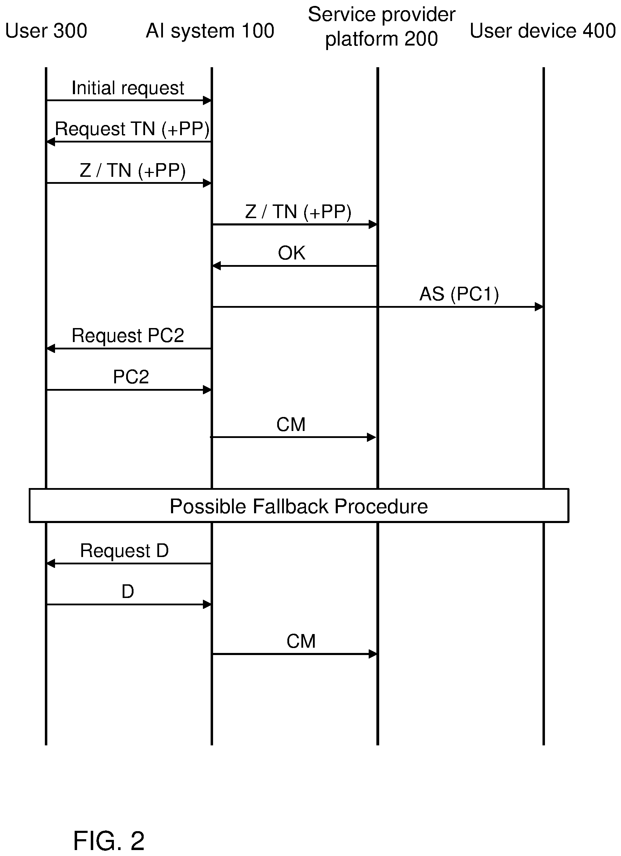

According to the invention, when a user (schematically represented by block 300 in figure 2) wishes to activate and/or use the service exploiting the Al system 100 functionalities, he/she activates the voice assistant and makes a general request (e.g., by uttering a wakeword followed by a request, such as: "Voice Assistant, I'd like to listen to some music from Music Provider!").

The Applicant notes that the expression "user" is meant to indicate one or more persons vocally interacting with the Al system 100 and specifically with the Al device 140 - thus, not necessarily one single person. In case multiple persons are involved, each vocal interaction with the Al platform can be handled by one or more of said persons.

The Al system 100, thanks to the cooperation between the first processor 111 and the sound detecting module 120, receives and processes such vocal request for the provision of a service - namely, provision of music from Music Provider which, in the present example, is the service provider.

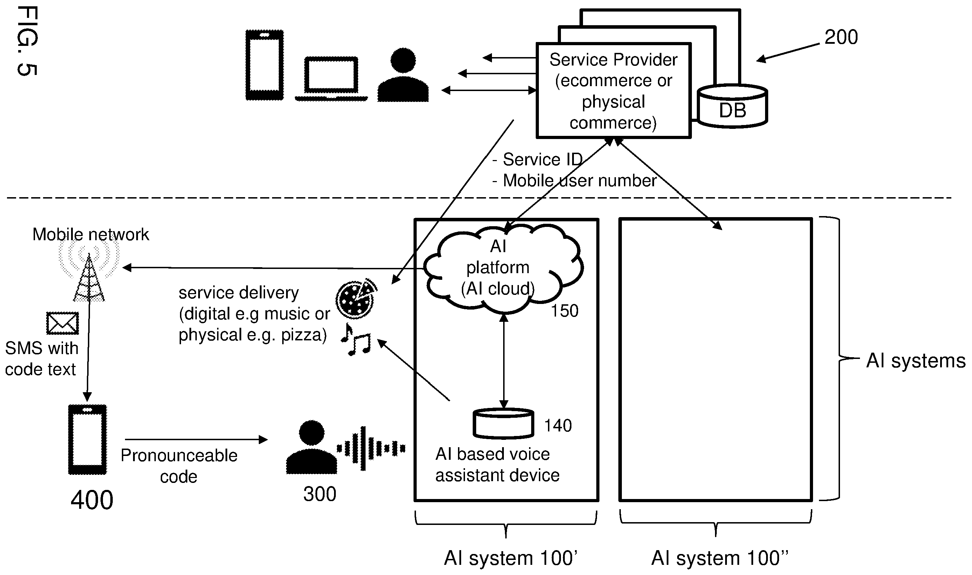

The Al system 100, and in particular the processing unit 110, then performs an authentication procedure in order to verify the identity of the user 300, and make sure, for example, that such individual has access to the premium service requested or that possible payments/expenses due to the provision of the service are actually charged to the correct individual (i.e. to the wallet/account actually associated with the person requesting the service). Such authentication procedure is schematically represented in figures 2, 5.

Preferably, the Al system 100 (and in particular the Al device 140 with the first processor 111, in cooperation with the sound generating module 130) vocally prompts the user 300 to vocally provide a telephone number TN, preferably a mobile telephone number.

Optionally, the Al system may also prompt the user 300 to pronounce a pronounceable password PP.

Then the Al system, and in particular the Al device 140, waits for the user 300 to vocally provide the telephone number TN, and the optional pronounceable password PP.

When the user 300 pronounces the telephone number TN, and optionally the pronounceable password PP, the Al system 100 (in particular the Al device 140) detects and processes such vocal signal, thus obtaining digital data representing the pronounced telephone number and optionally the pronounceable password PP.

In case the Al system 100 does not acquire the telephone number TN and/or the optional pronounceable password PP with sufficient confidence and reliability, it is envisaged that it can prompt the user 300 to repeat the telephone number and/or the optional pronounceable password PP, for a predetermined number of times. Preferably, once a maximum number of attempts have been made, and still the telephone number TN and/or the optional pronounceable password PP is not properly acquired, the Al system 100, and in particular the Al device 140, vocally informs the user 300 (through the sound generating module 130) that the telephone number (and/or the optional pronounceable password PP) has not been understood and the session is terminated.

Once the telephone number TN and the optional pronounceable password PP (if used) are properly detected (according to Al system 100 internal indicators), the Al system 100 - and in particular the processing unit 110 - cooperates with the service provider platform 200 to verify that the telephone number TN pronounced by the user 300 and the optional pronounceable password PP associated thereto correspond to an active subscription to the service.

In more details, the processing unit 110, and in particular the second processor 112, preferably sends the telephone number TN and, preferably, the optional pronounceable password PP to the service provider platform 200. The service provider platform 200 compares the telephone number TN and, preferably, the optional pronounceable password PP with the identifying information associated with active subscriptions, included in its database DB.

If the telephone number TN does not match any active subscription, or if the corresponding pronounceable password PP (if used) does not match the user selected PP, then a problem arises. The service provider platform 200 provides the Al platform 100 with a negative feedback, and the Al system 100 can either give the user 300 a further chance, or simply vocally inform the user 300 that no active service with said service provider appears to be associated with the user and, as a consequence, the service cannot be provided.

If the telephone number TN matches an active subscription, then the service can be provided - after the two-factor authentication procedure continues and terminates with a positive outcome.

Thus, the service provider platform 200 sends the Al system 100, in particular the Al platform 150, a positive feedback ("OK" in the diagram of figure 2).

Then the Al system 100 continues the authentication procedure.

The processing unit 110, in particular the second processor 112, selects a pronounceable code PC1. The pronounceable code PC1 can be a word, a sequence of words in the language used for interaction based on natural language between the user 300 and the Al device 140, a phrase, etc. that the user 300 can read and pronounce.

The processing unit 110, and in particular the second processor 112, sends an authentication message AM, including the pronounceable code PC1, to the telephone number TN.

The Applicant observes that the expression "sending a message to a telephone number" is meant to indicate that the message is sent to a certain device, that at the time of the message transmission is connected to a telecommunications network (i.e. the telecommunications network used for the message transmission) based on a subscription profile associated to said telephone number. Such device will be indicated as the user device 400. The user device 400 is preferably a mobile device, such as for example a smart phone. Preferably the user device 400 houses and cooperates with a SIM card or Universal Integrated Circuit Card, UICC, which allows the user device 400 to connect to the telecommunications network based on the aforesaid user profile and, in practical terms, to use the user's telephone number.

In case the user 300 comprises only one person, the user device 400 is preferably a device using such person's telephone number.

In case the user 300 comprises more than one person, the user device 400 is preferably a device using the telephone number of one of said persons.

Preferably, the authentication message AM is at least one of the following: an SMS message; an Unstructured Supplementary Service Data, USSD, message; a push notification of a dedicated application software installed on the user device 400, etc.

Preferably, the Al system 100, and in particular the Al platform 150, in cooperation with the Al device 140, vocally prompts the user 300 to pronounce the pronounceable code PC1 included in the authentication message AM.

Then the Al system 100 waits for a feedback from the user 300; when the latter vocally provides a pronounced code PC2, the Al system 100, and in particular the Al device 140, in cooperation with the Al platform 150, receives and interprets such feedback.

In more details, the processing unit 110, and in particular the second processor 112, compares the pronounceable code PC1 with the pronounced code PC2.

If the pronounced code PC2 matches the pronounceable code PC1, then the authentication is terminated with a positive outcome.

The Applicant notes that the authentication technique according to the invention is advantageously based on a double factor verification:
- first factor: the telephone number and/or the optional pronounceable password PP are associated to an active subscription at the service provider platform, and
- second factor: the telephone using said telephone number is actually available to the user.

Accordingly, the processing unit 110, and in particular the second processor 112, sends a confirmation message CM to the service provider platform 200.

In some applications, such as home environments, the two-factor voice authentication process may be used to support only security or purchase related scenarios as the Al devices 140 are normally registered to a specific and known user and the sharing of the Al device 140 is limited within the household environment. In multi user and public applications, such as public service environments, the two factor authentication procedure allows an Al system to be correctly and safely used by a multiplicity of unknown users, and a service provider to correctly and safely provide services via multiple Al systems simultaneously to the same user or to different users.

In an embodiment, the Al system 100, and in particular Al platform 150, in cooperation with the Al device 140, is configured to vocally receive details D associated to the service to be provided.

In other words, the processing unit 110 is adapted to vocally receive further information which better specifies the possibly generic request initially provided by the user 300.

For example, in case the user 300 has initially requested to listen to some music from a certain music platform, it is then possible to specifically indicate an artist, one or more songs, etc.

In an embodiment, the details D are provided together with the initial request.

In an embodiment, the details D are provided at a later stage, for example after verification of the correspondence between the pronounced code PC2 and the pronounceable code PC1.

Preferably, the Al system 100, and in particular the Al platform 150, in cooperation with the Al device 140, is configured to vocally prompt the user 300 to provide said details D. This operation can be carried out either at the beginning, immediately after the initial service request, or at a later stage, after verifying that the pronounced code PC2 corresponds to the pronounceable code PC1.

Preferably, the details D further specifying the service to be provided are included in the confirmation message CM.

From a practical point of view, the Al system 100 preferably performs the authentication operations in a substantially autonomous way - apart from exchange of data with the service provider platform 200 aimed to verify that the telephone number TN provided by the user 300 is actually associated with an active subscription - and, at the end of the authentication process, it sends the confirmation message CM to the service provider platform 200, providing all the necessary information for an order to be fulfilled, namely the already verified user identity and the information describing what the user 300 has to be provided with (e.g. a certain song). In figure 2, the confirmation message CM is sent to the service provider platform 200 after the details D are provided by the user. It is envisaged that the confirmation message CM can be sent to the service provider platforms also after the pronounced code PC2 is provided by the user 300 to the Al system 100, and before the details D are requested by the Al system 100 to the user.

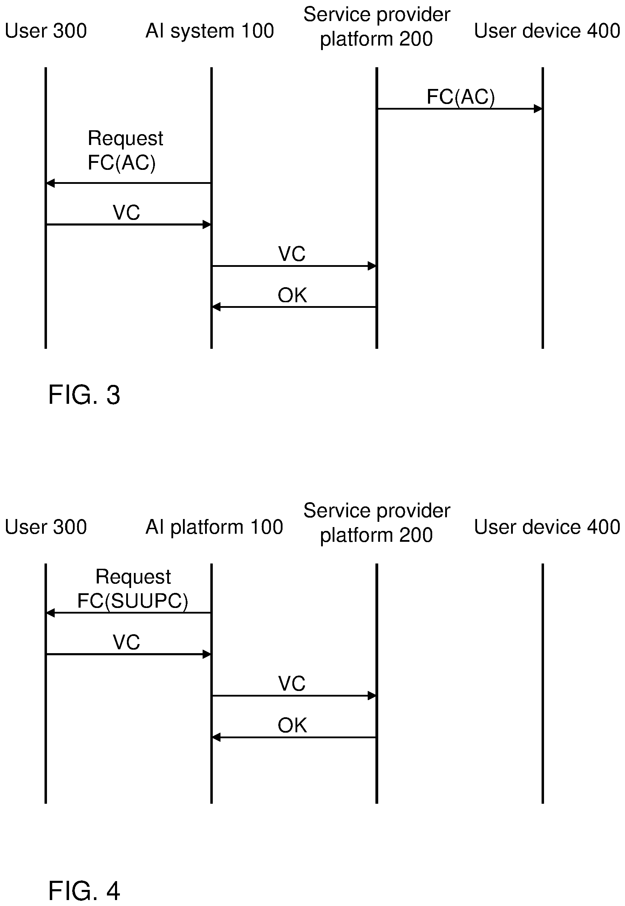

In case the pronounced code PC2 is not provided (or cannot be provided) by the user 300, a fallback procedure can be carried out (figures 3-4, 6-7).

For example, the fallback procedure can be necessary if, due to a failure in the code delivery process by the telecommunications network, due to some communication problem / miscommunication occurred between the user 300 and the Al system 100, or after a predetermined number of attempts, the pronounced code PC2 still does not match the pronounceable code PC1.

Preferably, the fallback procedure comprises vocally prompting the provision of a fallback code FC, receiving a vocal code VC, and cooperating with the service provider platform 200 to verify that the vocal code VC corresponds to the fallback code FC.

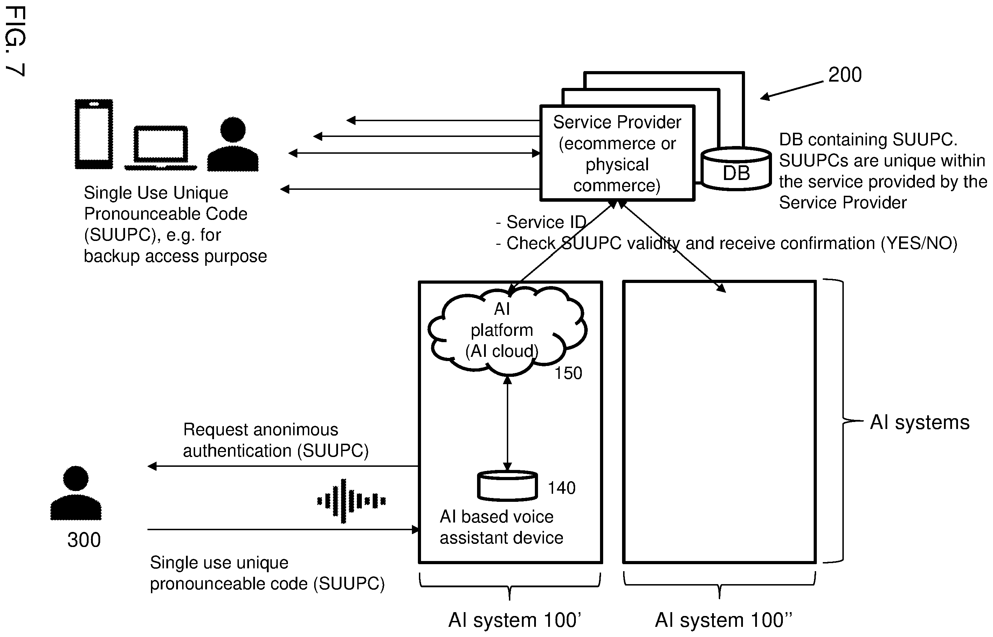

In an embodiment (figures 4, 7), the fallback code FC is a unique code associated to the telephone number TN in the user account activated in the service provider platform 200. The unique code can be a "Single Use Unique Pronounceable Code" (SUUPC). In particular, this unique code SUUPC can be associated to the telephone number TN upon activation of the service subscription with the service provider based on said telephone number TN. In other terms, when the user 300 subscribes to the service(s) provided by the service provider associated to the service provider platform 200, he/she is given a certain pronounceable code, that is the aforesaid unique code SUUPC. The user must keep the unique code SUUPC in mind and/or stored in a secure place - preferably independent from his/her user device 400, so that the unique code SUUPC can be used also when the mobile phone or the mobile network associated with the mobile phone does not work (e.g. due to lack of network coverage, run out battery, etc.). Preferably, the database DB associated to or included in the service provider platform 200 also contains the unique code SUUPC of each user/subscription. Thus, once the user 300 has vocally provided the vocal code VC, the Al system 100 cooperates with the service provider platform 200 to verify whether such vocal code VC matches the feedback code FC, i.e. the unique code SUUPC. In case the two codes match, the authentication procedure is positively terminated and, preferably, the user 300 is prompted to provide the service's further details D as explained above. A SUUPC provides adequate security also when used in public environments as its single use property provides protection against any audio eavesdropping which may occur in public spaces.

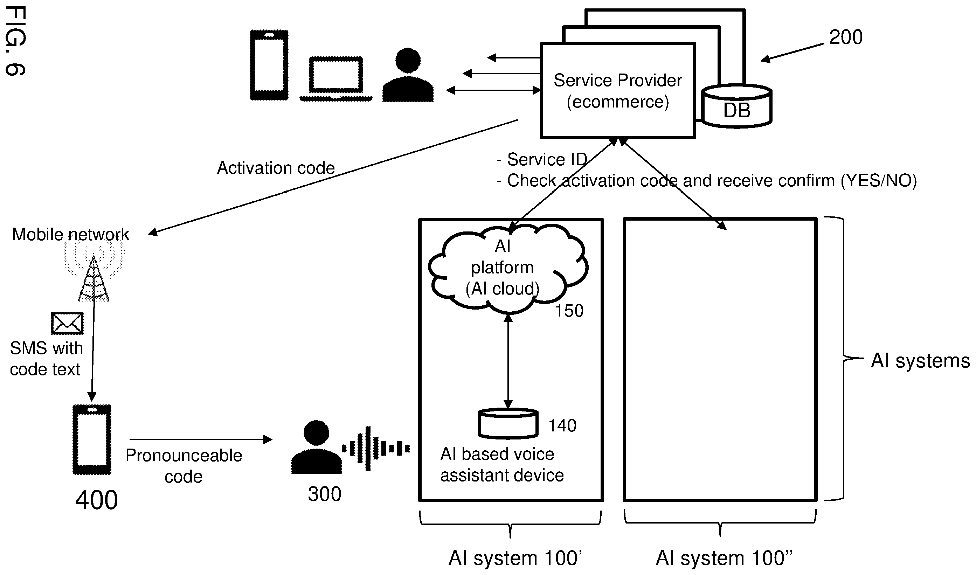

In an embodiment (figures 3, 6), the fallback code FC is a one-time activation code AC sent from said service provider platform 200 directly to said telephone number TN in device 400.

The one-time activation code AC is not, in principle, specifically associated to any user/subscription. It can be generated upon request, in real time, and associated to a validity limited in time. Thus, the one-time activation code AC is provided to the user device 400. As in the previous scenario, the Al platform 100, in cooperation with the service provider platform 200, verifies whether the vocal code VC pronounced by the user 300 corresponds to the one-time activation code AC. In the affirmative, the authentication procedure is positively terminated and, preferably, the user 300 is prompted to provide the service's further details D as explained above.

It has to be noted that the method disclosed above is based on the telephone number TN provided by the user 300 to the Al system 100.

The Applicant notes that in specific usage cases, for example when in the conversation between the user 300 and the Al device 140, the user may wish to avoid pronouncing his/her telephone number TN, the latter may be substituted with a single pronounceable word. When the Al system 100 detects that the telephone number TN has been substituted with a word and detects such word, it can query the service provider platform 200 for the telephone number TN corresponding to such word and therefore complete the two-factor authentication process based on such telephone number TN according the method presented above.

Thus, in general terms, the user 300 vocally provides the Al system 100 with a main code Z. The main code Z is representative of a telephone number TN.

In one embodiment, the main code Z coincides with the telephone number TN, i.e. the telephone number TN is directly vocally provided to the Al system 100 by the user 300.

In one embodiment, the main code Z is different from the telephone number TN but directly correlated thereto (in practice, the user vocally provides the Al system 100 with the aforementioned single pronounceable word); accordingly, the service provider platform 200 can verify whether the main code Z is associated, in its database DB, to a telephone number TN and thus to an active subscription; once a positive feedback is provided to the Al system 100, the authentication procedure can continue as disclosed above.

The Applicant observes that the present invention can be used by the service provider platform 200 across different Al systems without any substantial changes being necessary.

In other terms, once a certain service provider platform is generally adapted to cooperate with a certain Al systems, it is sufficient that the Al system be suitably configured to carry out the authentication method according to the invention, and the service provider platform will have the opportunity to exploit such authentication method.

If the service provider platform is adapted to cooperate also with a further Al system, once the further Al system is configured to carry out the authentication method according to the invention, the service provider platform will have the opportunity to exploit such authentication method also when services are requested through the further Al system.

Figures 5-5' schematically depict a scenario wherein the service provider platform 200 cooperates with a first Al system 100' (which can coincide with the Al system 100 described above), and with a second AI system 100", different from the first Al system 100', but equally implementing the authentication method according to the invention.

In this scenario, the user can vocally request/activate a service through the service provider platform 200 choosing either the first Al system 100' or the second Al system 100". In any event, the chosen Al system will perform an authentication procedure according to the invention.

The invention achieves important advantages.

Firstly, the Applicant notes that the authentication technique according to the present invention is based on two distinct and independent factors, namely the user's telephone number and corresponding (optional) pronounceable password, and the pronounceable code. This significantly improves security and reliability of the system with respect to the methods made available by the state of the art.

Furthermore, being the user telephone number a global coordinated identifier, the invention can be easily implemented by multiple Al systems, thus giving the service provider and the final users a wide range of possibilities to interact with the same (high) level of security and reliability.

Furthermore, the invention can be applied depending on the requirements of the specific service in both private and public scenarios, independently from the vocal assistant device being previously registered to a specific user or not, and therefore independently from any specific Al system authentication system, for example based on proprietary biometric data provided by the user. The invention thus allows avoiding usage of such biometric data, the provision of which in public environment can be quite critical and difficult to control, due to a number of practical and legal matters.

In addition to the above, the Applicant notes that using the telephone number as one of the two authentication factors allows the service provider to easily identify the user, thereby giving the service provider platform / the Al platform the possibility to avoid requesting further identifying information (e.g. account details) to the user.

## Claims

1. Method for authenticating a user, the method being carried out by an Artificial Intelligence, AI, system (100), said AI system (100) being configured to provide voice assistant functionalities, said method comprising:
receiving from a user (300) a vocal request for using a service, the service being provided by a service provider, the service provider being associated with a service provider platform (200); the method being **characterised by** further comprising:
vocally receiving from the user (300) a main code (Z) representative of a telephone number (TN);
cooperating with the service provider platform (200) to verify that the telephone number (TN) associated to said main code (Z) corresponds to an active subscription to said service;
if it is verified that the telephone number (TN) corresponds to an active subscription, sending to the telephone number (TN) an authentication message (AM) including a pronounceable code (PC1);
vocally receiving from the user (300) a pronounced code (PC2);
verifying that the pronounced code (PC2) corresponds to the pronounceable code (PC1);
if it is verified that the pronounced code (PC2) corresponds to the pronounceable code (PC1), sending a confirmation message (CM) to the service provider platform (200).

2. Method according to claim 1 comprising, before said main code (Z) is vocally provided, vocally prompting the provision of said main code (Z).

3. Method according to claim 1 or 2 wherein cooperating with the service provider platform (200) to verify that the telephone number (TN) corresponds to an active subscription comprises:
sending the main code (Z) to the service provider platform (200);
receiving from the service provider platform (200) a response representative of a comparison between the main code (Z) and data included in a subscription database of the service provider platform (200).

4. Method according to anyone of the preceding claims wherein said main code (Z) coincides with said telephone number (TN) or is a single pronounceable code correlated to said telephone number (TN).

5. Method according to anyone of the preceding claims comprising, before the pronounced code (PC2) is vocally provided, vocally prompting the provision of the pronounced code (PC2).

6. Method according to anyone of the preceding claims comprising vocally receiving details (D) associated to the service to be provided.

7. Method according to claim 6 comprising vocally prompting the provision of said details (D).

8. Method according to claim 7 wherein said details (D) are prompted and received after verifying that the pronounced code (PC2) corresponds to the pronounceable code (PC1).

9. Method according to anyone of claims 6 to 8 wherein said confirmation message (CM) comprises said details (D).

10. Method according to anyone of the preceding claims comprising performing a fallback procedure in case said pronounced code (PC2) is not provided.

11. Method according to claim 10 wherein said fallback procedure comprises:
vocally prompting the provision of a fallback code (FC);
receiving a vocal code (VC);
cooperating with the service provider platform (200) to verify that the vocal code (VC) corresponds to the fallback code (FC).

12. Method according to claim 11 wherein said fallback code (FC) is a unique code (SUUPC) associated to said telephone number (TN), preferably associated to said telephone number (TN) upon activation of a service subscription with said service provider based on said telephone number (TN).

13. Method according to claim 11 wherein said fallback code (FC) is a one-time activation code sent from said service provider platform (200) to said telephone number (TN).

14. Software program product including instructions that, when executed by one or more processors (111, 112) of an Artificial Intelligence, AI, system (100), cause the execution of the method according to anyone of the preceding claims.

15. Artificial Intelligence, AI, system, said AI system (100) being configured to provide voice assistant functionalities, said AI system (100) comprising a processing unit (110), a sound detecting module (120) associated to said processing unit (110) and a sound generating module (130) associated to said processing unit (110), said processing unit (110) being configured to:
receive from a user (300), through said sound detecting module (120), a vocal request for using a service, the service being provided by a service provider, the service provider being associated with a service provider platform (200);
vocally receiving from the user (300), through said sound detecting module (120), a main code (Z) representative of a telephone number (TN);
cooperating with the service provider platform (200) to verify that the telephone number (TN) associated to said main code (Z) corresponds to an active subscription to said service;
if it is verified that the telephone number (TN) corresponds to an active subscription, sending to the telephone number (TN) an authentication message (AM) including a pronounceable code (PC1);
vocally receiving from the user (300), through said sound detecting module (120), a pronounced code (PC2);
verifying that the pronounced code (PC2) corresponds to the pronounceable code (PC1);
if it is verified that the pronounced code (PC2) corresponds to the pronounceable code (PC1), sending a confirmation message (CM) to the service provider platform (200).

## Patentansprüche

1. Verfahren zum Authentifizieren eines Benutzers, wobei das Verfahren von einem künstlichen Intelligenz(KI)-System (100) umgesetzt wird, wobei das KI-System (100) dazu ausgelegt ist, sprachgestützte Funktionalitäten bereitzustellen, wobei das Verfahren Folgendes umfasst:
Empfangen einer Sprachanforderung zum Verwenden eines Dienstes von einem Benutzer (300), wobei der Dienst von einem Dienstanbieter bereitgestellt wird, wobei der Dienstanbieter mit einer Dienstanbieterplattform (200) verknüpft ist;
wobei das Verfahren **dadurch gekennzeichnet ist, dass** es ferner Folgendes umfasst:
sprachliches Empfangen eines Hauptcodes (Z), der eine Telefonnummer (TN) repräsentiert, vom Benutzer (300);
Zusammenwirken mit der Dienstanbieterplattform (200), um zu verifizieren, dass die Telefonnummer (TN), die mit dem Hauptcode (Z) verknüpft ist, einer aktiven Subskription des Dienstes entspricht;
falls verifiziert wird, dass die Telefonnummer (TN) einer aktiven Subskription entspricht, Senden einer Authentifizierungsnachricht (AM), die einen aussprechbaren Code (PC1) beinhaltet, an die Telefonnummer (TN);
sprachliches Empfangen eines ausgesprochenen Codes (PC2) vom Benutzer (300);
Verifizieren, dass der ausgesprochene Code (PC2) dem aussprechbaren Code (PC1) entspricht;
falls verifiziert wird, dass der ausgesprochene Code (PC2) dem aussprechbaren Code (PC1) entspricht, Senden einer Bestätigungsnachricht (CM) an die Dienstanbieterplattform (200).

2. Verfahren nach Anspruch 1, das das sprachliche Abfragen der Bereitstellung des Hauptcodes (Z) umfasst, bevor der Hauptcode (Z) sprachlich bereitgestellt wird.

3. Verfahren nach Anspruch 1 oder 2, wobei das Zusammenwirken mit der Dienstanbieterplattform (200), um zu verifizieren, dass die Telefonnummer (TN) einer aktiven Subskription entspricht, Folgendes umfasst:
Senden des Hauptcodes (Z) an die Dienstanbieterplattform (200);
Empfangen einer Antwort, die für einen Vergleich zwischen dem Hauptcode (Z) und Daten repräsentativ ist, die in einer Subskriptionsdatenbank der Dienstanbieterplattform (200) beinhaltet sind, von der Dienstanbieterplattform (200).

4. Verfahren nach einem der vorhergehenden Ansprüche, wobei der Hauptcode (Z) mit der Telefonnummer (TN) zusammenfällt oder ein einzelner aussprechbarer Code ist, der mit der Telefonnummer (TN) korreliert.

5. Verfahren nach einem der vorhergehenden Ansprüche, das das sprachliche Abfragen der Bereitstellung des ausgesprochenen Codes (PC2) umfasst, bevor der ausgesprochene Code (PC2) sprachlich bereitgestellt wird.

6. Verfahren nach einem der vorhergehenden Ansprüche, das das sprachliche Empfangen von Details (D) umfasst, die mit dem bereitzustellenden Dienst verknüpft sind.

7. Verfahren nach Anspruch 6, das das sprachliche Abfragen der Bereitstellung der Details (D) umfasst.

8. Verfahren nach Anspruch 7, wobei die Details (D) abgefragt und empfangen werden, nachdem verifiziert wurde, dass der ausgesprochene Code (PC2) dem aussprechbaren Code (PC1) entspricht.

9. Verfahren nach einem der Ansprüche 6 bis 8, wobei die Bestätigungsnachricht (CM) die Details (D) umfasst.

10. Verfahren nach einem der vorhergehenden Ansprüche, das das Durchführen einer Fallbackprozedur umfasst, falls der ausgesprochene Code (PC2) nicht bereitgestellt wird.

11. Verfahren nach Anspruch 10, wobei die Fallbackprozedur Folgendes umfasst:
sprachliches Abfragen der Bereitstellung eines Fallbackcodes (FC);
Empfangen eines sprachlichen Codes (VC);
Zusammenwirken mit der Dienstanbieterplattform (200), um zu verifizieren, dass der sprachliche Code (VC) dem Fallbackcode (FC) entspricht.

12. Verfahren nach Anspruch 11, wobei der Fallbackcode (FC) ein eindeutiger Code (SUUPC) ist, der mit der Telefonnummer (TN) verknüpft ist, vorzugsweise nach Aktivierung einer Dienstsubskription mit dem Dienstanbieter auf Basis der Telefonnummer (TN) mit der Telefonnummer (TN) verknüpft.

13. Verfahren nach Anspruch 11, wobei der Fallbackcode (FC) ein einmaliger Aktivierungscode ist, der von der Dienstanbieterplattform (200) an die Telefonnummer (TN) gesendet wird.

14. Softwareprogrammprodukt, das Anweisungen beinhaltet, die, wenn sie von einem oder mehreren Prozessoren (111, 112) eines künstlichen Intelligenz(KI)-Systems (100) ausgeführt werden, die Ausführung des Verfahrens nach einem der vorhergehenden Ansprüche veranlasst.

15. Künstliches Intelligenz(KI)-System, wobei das KI-System (100) dazu ausgelegt ist, sprachgestützte Funktionalitäten bereitzustellen, wobei das KI-System (100) eine Verarbeitungseinheit (110), ein Klangdetektionsmodul (120), das mit der Verarbeitungseinheit (110) verknüpft ist, und ein Klangerzeugungsmodul (130), das mit der Verarbeitungseinheit (110) verknüpft ist, umfasst, wobei die Verarbeitungseinheit (110) zu Folgendem ausgelegt ist:
Empfangen einer Sprachanforderung über das Klangdetektionsmodul (120) zum Verwenden eines Dienstes von einem Benutzer (300), wobei der Dienst von einem Dienstanbieter bereitgestellt wird, wobei der Dienstanbieter mit einer Dienstanbieterplattform (200) verknüpft ist;
sprachliches Empfangen eines Hauptcodes (Z), der eine Telefonnummer (TN) repräsentiert, über das Klangdetektionsmodul (120) vom Benutzer (300);
Zusammenwirken mit der Dienstanbieterplattform (200), um zu verifizieren, dass die Telefonnummer (TN), die mit dem Hauptcode (Z) verknüpft ist, einer aktiven Subskription des Dienstes entspricht;
wenn verifiziert wird, dass die Telefonnummer (TN) einer aktiven Subskription entspricht, Senden einer Authentifizierungsnachricht (AM), die einen aussprechbaren Code (PC1) beinhaltet, an die Telefonnummer (TN);
sprachliches Empfangen eines ausgesprochenen Codes (PC2) über das Klangdetektionsmodul (120) vom Benutzer (300);
Verifizieren, dass der ausgesprochene Code (PC2) dem aussprechbaren Code (PC1) entspricht;
wenn verifiziert wird, dass der ausgesprochene Code (PC2) dem aussprechbaren Code (PC1) entspricht, Senden einer Bestätigungsnachricht (CM) an die Dienstanbieterplattform (200).

## Revendications

1. Procédé d'authentification d'un utilisateur, le procédé étant mis en œuvre par un système d'intelligence artificielle, IA, (100), ledit système d'IA (100) étant configuré de manière à fournir des fonctionnalités d'assistant vocal, ledit procédé comprenant le fait de :
recevoir, en provenance d'un utilisateur (300), une demande vocale d'utilisation d'un service, le service étant fourni par un fournisseur de services, le fournisseur de services étant associé à une plateforme de fournisseur de services (200) ; le procédé étant **caractérisé en ce qu'**il comprend en outre le fait de :
recevoir vocalement, en provenance de l'utilisateur (300), un code principal (Z) représentatif d'un numéro de téléphone (TN) ;
coopérer avec la plateforme de fournisseur de services (200) pour vérifier que le numéro de téléphone (TN) associé audit code principal (Z) correspond à un abonnement actif audit service ;
s'il est vérifié que le numéro de téléphone (TN) correspond à un abonnement actif, envoyer, au numéro de téléphone (TN), un message d'authentification (AM) comprenant un code prononçable (PC1) ;
recevoir vocalement, en provenance de l'utilisateur (300), un code prononcé (PC2) ;
vérifier que le code prononcé (PC2) correspond au code prononçable (PC1) ;
s'il est vérifié que le code prononcé (PC2) correspond au code prononçable (PC1), envoyer un message de confirmation (CM) à la plateforme de fournisseur de services (200).

2. Procédé selon la revendication 1, comprenant, avant que ledit code principal (Z) ne soit fourni vocalement, le fait d'inciter vocalement à la fourniture dudit code principal (Z).

3. Procédé selon la revendication 1 ou 2, dans lequel le fait de coopérer avec la plateforme de fournisseur de services (200) pour vérifier que le numéro de téléphone (TN) correspond à un abonnement actif comprend le fait de :
envoyer le code principal (Z) à la plateforme de fournisseur de services (200) ;
recevoir, en provenance de la plateforme de fournisseur de services (200), une réponse représentative d'une comparaison entre le code principal (Z) et des données incluses dans une base de données d'abonnement de la plateforme de fournisseur de services (200).

4. Procédé selon l'une quelconque des revendications précédentes, dans lequel ledit code principal (Z) coïncide avec ledit numéro de téléphone (TN) ou est un code prononçable unique corrélé audit numéro de téléphone (TN).

5. Procédé selon l'une quelconque des revendications précédentes, comprenant, avant que le code prononcé (PC2) ne soit fourni vocalement, le fait d'inciter vocalement à la fourniture du code prononcé (PC2).

6. Procédé selon l'une quelconque des revendications précédentes, comprenant le fait de recevoir vocalement des détails (D) associés au service à fournir.

7. Procédé selon la revendication 6, comprenant le fait d'inciter vocalement à la fourniture desdits détails (D).

8. Procédé selon la revendication 7, dans lequel lesdits détails (D) sont incités et reçus après vérification que le code prononcé (PC2) correspond au code prononçable (PC1).

9. Procédé selon l'une quelconque des revendications 6 à 8, dans lequel ledit message de confirmation (CM) comprend lesdits détails (D).

10. Procédé selon l'une quelconque des revendications précédentes, comprenant l'exécution d'une procédure de secours au cas où ledit code prononcé (PC2) n'est pas fourni.

11. Procédé selon la revendication 10, dans lequel ladite procédure de secours comprend le fait de :
inciter vocalement à la fourniture d'un code de secours (FC) ;
recevoir un code vocal (VC) ;
coopérer avec la plateforme de fournisseur de services (200) pour vérifier que le code vocal (VC) correspond au code de secours (FC).

12. Procédé selon la revendication 11, dans lequel ledit code de secours (FC) est un code unique (SUUPC) associé audit numéro de téléphone (TN), de préférence associé audit numéro de téléphone (TN) lors de l'activation d'un abonnement de service auprès dudit fournisseur de services sur la base dudit numéro de téléphone (TN).

13. Procédé selon la revendication 11, dans lequel ledit code de secours (FC) est un code d'activation à usage unique envoyé par ladite plateforme de fournisseur de services (200) audit numéro de téléphone (TN).

14. Produit-programme logiciel comprenant des instructions qui, lorsqu'elles sont exécutées par un ou plusieurs processeurs (111, 112) d'un système d'intelligence artificielle, IA, (100), occasionnent l'exécution du procédé selon l'une quelconque des revendications précédentes.

15. Système d'intelligence artificielle, IA, ledit système d'IA (100) étant configuré de manière à fournir des fonctionnalités d'assistant vocal, ledit système d'IA (100) comprenant une unité de traitement (110), un module de détection de sons (120) associé à ladite unité de traitement (110), et un module de génération de sons (130) associé à ladite unité de traitement (110), ladite unité de traitement (110) étant configurée de manière à :
recevoir, en provenance d'un utilisateur (300), par le biais dudit module de détection de sons (120), une demande vocale d'utilisation d'un service, le service étant fourni par un fournisseur de services, le fournisseur de services étant associé à une plateforme de fournisseur de services (200) ;
recevoir vocalement, en provenance de l'utilisateur (300), par le biais dudit module de détection de sons (120), un code principal (Z) représentatif d'un numéro de téléphone (TN) ;
coopérer avec la plateforme de fournisseur de services (200) pour vérifier que le numéro de téléphone (TN) associé audit code principal (Z) correspond à un abonnement actif audit service ;
s'il est vérifié que le numéro de téléphone (TN) correspond à un abonnement actif, envoyer, au numéro de téléphone (TN), un message d'authentification (AM) comprenant un code prononçable (PC1) ;
recevoir vocalement, en provenance de l'utilisateur (300), par le biais dudit module de détection de sons (120), un code prononcé (PC2) ;
vérifier que le code prononcé (PC2) correspond au code prononçable (PC1) ;
s'il est vérifié que le code prononcé (PC2) correspond au code prononçable (PC1), envoyer un message de confirmation (CM) à la plateforme de fournisseur de services (200).
